(19) **Europäisches Patentamt / European Patent Office / Office européen des brevets**

(11) **EP 4 647 752 A1**

(12) **EUROPEAN PATENT APPLICATION**
published in accordance with Art. 153(4) EPC

(43) Date of publication:
**12.11.2025 Bulletin 2025/46**

(21) Application number: **23915029.5**

(22) Date of filing: **29.12.2023**

(51) International Patent Classification (IPC):
*G01N 29/04* (2006.01)  *G01N 29/42* (2006.01)
*G01N 29/44* (2006.01)  *G01N 29/46* (2006.01)

(52) Cooperative Patent Classification (CPC):
**G01N 29/04; G01N 29/42; G01N 29/44; G01N 29/46**

(86) International application number:
**PCT/KR2023/021982**

(87) International publication number:
**WO 2024/147570 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.01.2023 KR 20230000782**

(71) Applicant: **Seoul National University R&DB Foundation**
**Seoul 08826 (KR)**

(72) Inventors:
• **KANG, Thomas Hyun Koo**
**Seoul 06310 (KR)**
• **LEE, Sang Min**
**Changwon-si, Gyeongsangnam-do 51469 (KR)**

(74) Representative: **Dompatent**
**Partnerschaft von Patent- und Rechtsanwälten mbB**
**Deichmannhaus am Dom**
**Bahnhofsvorplatz 1**
**50667 Köln (DE)**

(54) **SYSTEM FOR DETECTING INTERNAL DEFECTS IN CONCRETE MEMBERS ON BASIS OF ARTIFICIAL INTELLIGENCE**

(57) The present invention relates to a system for detecting internal defects in concrete members on the basis of artificial intelligence, wherein, when defects are determined by using deep learning in non-destructive inspection of concrete structures, a defect occurrence determination model is constructed by using a bidirectional LSTM model, and thus, the system is not only suitable for processing data having long sequences but can also improve the accuracy of classification through deep learning and minimize computation time.

[FIG 6]

## Description

## Technical Field

The present invention relates to an artificial intelligence-based internal defect detection system for concrete members, which when detecting a defect state through deep learning in non-destructive testing of concrete structures, builds a defect occurrence determination model using a bidirectional LSTM model, thereby being suitable for processing data with long sequences, improving the accuracy of classification through deep learning, and minimizing computation time.

## Background Art

A concrete structure needs regular safety diagnostics since being susceptible to defects due to various causes, such as disasters like earthquakes and strong winds, freeze damage, poor construction, inadequate drainage and waterproofing designs, and the likes. Moreover, for the repair and reinforcement of aging structures, it is very important to detect accurate defect locations.

Since the current safety diagnostics of structures mainly rely on visual inspections, it is difficult to accurately detect the presence and location of internal defects in concrete members.

Moreover, to detect the condition of a concrete structure more accurately, the core sampling method of extracting cylindrical core specimens from the concrete structure using a core drill and directly conducting a strength test on the specimens has been widely used.

However, the core sampling method inevitably causes a damage to the structure, requires lots of time for coring when reinforcing rods exist at the coring site, and also requires repair and reinforcement work at the coring site after core extraction. Furthermore, there is a restriction in location of core extraction, and extraction workability may be significantly deteriorated according to the location of coring.

To solve the problems of the core sampling method, various types of non-destructive testing of concrete, which allow for examining the properties, condition, or internal structure of a target member without causing any damage to the target member, have been developed.

Non-destructive testing methods include the surface impact method, the ultrasonic method, the magnetic method, the potential method, the acoustic emission (AE) method, the electromagnetic wave method, the infrared method, the radiation method, the resonance method, etc., and the methods are described as follows.

The surface impact method is a method of evaluating the strength or homogeneity of a member by measuring the distance that a measuring rod driven by a spring rebounds after hitting the concrete surface. A representative example of the surface impact method is the Schmidt hammer test. The surface impact method has an advantage in that equipment is lightweight and easy to handle, but has a disadvantage in that reliability in predicting strength is low due to the significant influence of concrete surface conditions.

The ultrasonic method is a method of utilizing the principle that the speed of sound waves varies depending on the density of the medium. The ultrasonic method predicts the homogeneity, quality, compressive strength, and modulus of elasticity of concrete by measuring the time that it takes for ultrasonic waves emitted from a transmitter located on the concrete surface to return to an adjacent receiver through the concrete medium. The ultrasonic method has an advantage in that equipment is relatively inexpensive and not difficult to operate, but has a disadvantage in that it requires specialized knowledge and training since it is difficult to interpret the measurement results. Additionally, the density, aggregate content, moisture content of the concrete, and the presence of reinforcing rods can affect the measurements.

The magnetic method is a method of using changes in the magnetic field caused by the reinforcing rods to detect the location, covering thickness, and size of the reinforcing rods. The magnetic method is widely used to inspect the precision of reinforcing rod installation and determine the location for concrete core extraction due to the portability. However, has several disadvantages in that it is difficult to interpret and also difficult to trust the measurement values when excessive reinforcing rods are distributed or excessive meshes are embedded.

The potential method is a method of evaluating the degree of corrosion of reinforcing rods by measuring the potential difference between the reinforcing rods and the concrete and creating a potential map. The potential method makes field measurements convenient due to the portability and provides reliable information. However, the potential method has several disadvantages in that equipment must be taken close to the reinforcing rods, and in that result values can vary according to the salt content and temperature of the test specimen.

The acoustic emission (AE) method is a method that, when sound waves are generated by the rapid release of energy due to crack growth or plastic deformation in the structure, monitors the behavior of a concrete structure by sensing the sound waves through sensors placed on the surface of the target structure. The AE method is commonly used in conjunction with load tests. The AE method requires high operational costs, is only applicable when cracks grow due to loads applied to the structure, and necessitates experts since requiring extensive knowledge to plan the test and interpret the results.

The electromagnetic wave method is a method of inspecting the inner strength, voids, delamination, or thickness of a structure. The electromagnetic wave method can test even if only one side of an investigation target is exposed regardless of the depth of the member, and can record images obtained from the investigation cross-section. However, the electromagnetic wave method has several disadvantages in that equipment is expensive, and in that the possibility of detecting voids significantly decreases in the presence of reinforcing rods.

The infrared method is a method of detecting infrared radiation emitted from a structure to identify cracks, delamination, and internal voids in concrete. The infrared method is a relatively accurate method for detecting concrete defects and can be applied quickly over large areas, but requires special expertise and expensive equipment.

The radiation method uses the principle that the absorption rate of radiation, like X-rays, is influenced by the thickness and density of the test specimen to investigate the condition, location, size of reinforcing rods, and the density, soundness, and thickness of concrete. The radiation met can detect internal defects, is applicable to a wide range of materials, and is easy to carry equipment. However, the radiation method has several disadvantages in that equipment is expensive, there are concerns about the reliability of the safety of the radiation-emitting device, and it is necessary to access from both sides of the investigation subject is needed, thereby requiring experts for result interpretation.

The resonance method is used to detect voids and delamination in the field by creating resonance conditions between two reflective surfaces. However, the resonance method is limited by the shape and dimensions of the object under investigation.

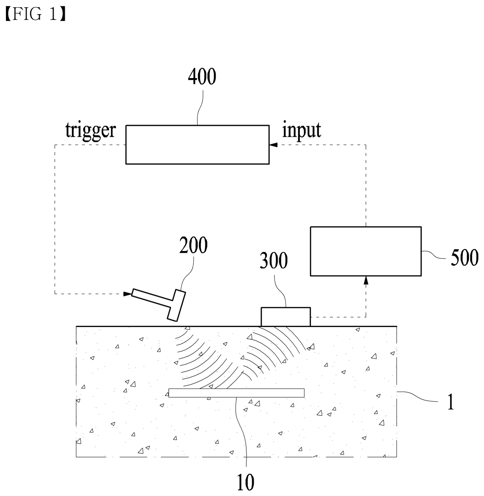

Additionally, to overcome the problem of the high-cost equipment required for existing non-destructive testing methods, the impact echo method has been developed (see FIG. 1). The impact echo method is economical and straightforward as it only requires a steel ball to impact the surface of the structure and a microphone to measure vibrations.

The impact echo method receives the response at a receiver 300 by applying an impact to the surface of the concrete member 1 using an impactor 200 to determine the defects 10 in the concrete member 1. And includes an oscilloscope 400 and a receiver amplifier 500.

The impact echo method applies a transient stress wave to the surface of the concrete member and utilizes the phenomenon of the wave spreading inside the concrete. Longitudinal waves (P-waves) and shear waves (S-waves) are reflected or refracted at boundaries, and R-waves propagate along the surface. In this instance, Due to the significant difference in acoustic impedance between concrete and air at the boundary, most of the waves are reflected, and resonance occurs due to repeated reflections at the boundary. The conventional impact echo method transforms time-domain time series signals into the frequency-domain time series signals through the Fourier transformation using the principle, determining the thickness of the concrete slab by using the frequency domain at the peak.

However, the method is cumbersome and impractical as requiring multiple repeated experiments to create a precise resonant vibration mode. Additionally, since various materials like reinforcing rods, tendons, and ducts are buried inside the concrete structure, uncertainties due to reflections, refractions, and diffractions increase.

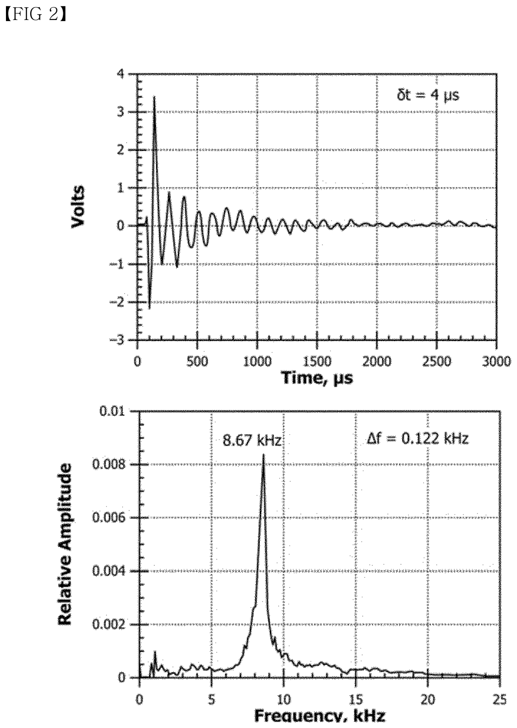

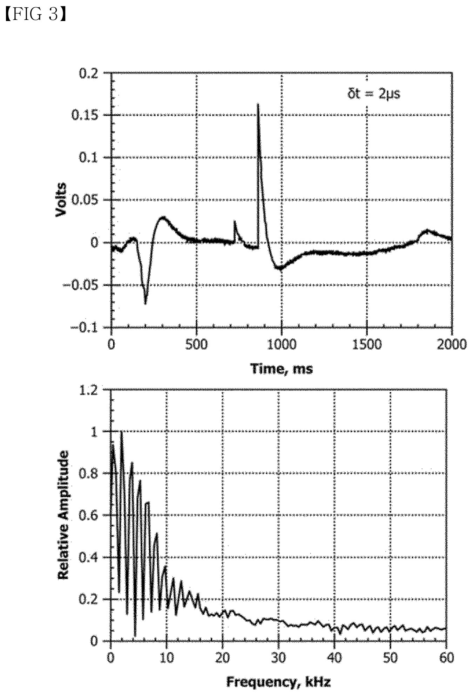

In addition, in a good measurement example, as illustrated in FIG. 2, a clear peak appears, but in a case in which a proper vibration mode is not created or there is an influence of other internal materials, as illustrated in FIG. 3, it is difficult to determine due to unclear peaks.

Moreover, even if a proper vibration mode is created, without performing a Fourier transformation, as there is almost no difference in the measured time series data when there are defects inside (defected) and when there are no detects inside (sound), it is very difficult to inspect and determine the presence of internal defects based on the time-series data with naked eyes.

Meanwhile, artificial intelligence, particularly deep learning technology, which mimics human neural networks, has shown excellent performance in classification and prediction. The convolutional neural network (CNN) and the recurrent neural network (RNN) are well-known. When time series or sequence data is used as input data, the convolutional neural network (CNN) is commonly used. However, the simple recurrent neural network experiences gradient vanishing, where the gradient diminishes to zero, during the Backpropagation Through Time (BPTT) process due to the chain rule. Therefore, in a case of long-term data processing, due to long-term dependency, where the network fails to remember values from the distant past, it is difficult to perform proper deep learning training.

To overcome the problems, a long short-term memory (LSTM) network structure has been developed.

For instance, in Korean Patent No. 10-2241879, to detect the presence of voids in a prestressed concrete structure, defects are determined through deep learning of frequency signals using the LSTM network.

However, like the RNN, since the LSTM process input in chronological order, there is a limitation that results are converged based on the most recent patterns.

Additionally, the aforementioned patent extracts frequency components from measured time-series vibration data using fast Fourier transformation (FFT) to create frequency signals. However, the FFT requires minutes to tens of minutes to analyze a single point of vibration data due to high computational loads, and so requires high costs and inspection times, thus impeding immediate result derivation and reducing practicality. In addition, frequency domain signals obtained through the FFT rely on human experiences since making it difficult to distinguish between defective and non-defective cases, and the accuracy of analysis drastically decreases if the number of deep learning training sessions is insufficient.

**Disclosure**

## Technical Problem

Accordingly, the present invention has been made in view of the above-mentioned problems occurring in the related art, and it is an object of the present invention to provide an artificial intelligence-based internal defect detection system for concrete members, which when detecting a defect state through deep learning in non-destructive testing of concrete structures, is suitable for processing data with long sequences, improves the accuracy of classification through deep learning, and minimizes computation time.

## Technical Solution

To accomplish the above-mentioned objects, according to the present invention, there is provided an artificial intelligence-based internal defect detection system for concrete members including: a signal detection unit, which includes a first detection unit attached or placed close to the concrete member and detecting a reflection signal by excitation applied to a concrete member, which is a target inspection, to measure both the reflection signal and external noise simultaneously, and a second detection unit installed to be spaced apart from the concrete member at a position close to the concrete member to measure external noise; and a data processing unit, which includes a signal processing unit which generates an impact echo signal by calculating a difference between a detection signal of the first detection unit and a detection signal of the second detection unit, generates a frequency signal from the impact echo signal, and extracts instantaneous frequency data from the frequency signal, and a defect determination module which receives the instantaneous frequency data generated by the signal processing unit as feature information to determine occurrence of defects of the concrete member, builds a defect occurrence decision model using a bidirectional LSTM model, and determines defects of the concrete member using the defect occurrence decision model based on the detected signal.

According to another embodiment, the signal processing unit (41) can extract spectrum entropy data from the frequency signal, and the spectrum entropy data has feature information input into the defect occurrence decision model.

According to another embodiment, the signal processing unit (41) generates spectral entropy data from the frequency signal by the fast Fourier transformation.

## Advantageous Effect

According to the present invention, the artificial intelligence-based internal defect detection system for concrete members enables the defect determination module to learn the frequency signal, which is generated by the signal processing unit from the detection signal caused by excitation applied to the concrete member, through deep learning, thereby determining whether the concrete member is defected or not.

Specifically, the artificial intelligence-based internal defect detection system for concrete members can build the defect occurrence determination model using the bidirectional LSTM model, thereby being suitable for processing data with long sequences, improving the accuracy of classification through deep learning, and minimizing computation time.

In addition, when instantaneous frequency data is input as feature information into the defect occurrence decision model, training time for deep learning can be significantly reduced, and defects can be determined almost simultaneously with the impact on the concrete member, thereby performing non-destructive testing quickly over a wide range of locations.

## Description of Drawings

FIG. 1 is a mimetic diagram illustrating a non-destructive testing method using the impact echo method.
FIG. 2 is data representing a good measurement example of non-destructive testing by the impact echo method.
FIG. 3 is data representing a poor measurement example of non-destructive testing by the impact echo method.
FIG. 4 is a view illustrating an internal defect detection system for concrete members according to an embodiment of the present invention.
FIG. 5 is a view illustrating a biLSTM network structure.
FIG. 6 is a view illustrating an internal defect detection system for concrete members according to another embodiment of the present invention.
FIG. 7 is a graph showing the progress of training with frequency-amplitude data as an input layer.
FIG. 8 is a view illustrating the confusion matrix for the training results with frequency-amplitude data as the input layer.
FIG. 9 is a view showing a confusion matrix of test results.
FIG. 10 is a spectrogram calculated from a frequency signal.
FIG. 11 is a graph representing spectrum entropy data.
FIG. 12 is a graph showing instantaneous frequency.
FIG. 13 is a graph showing the progress of training with spectrum entropy data and instantaneous data as the input layer.
FIG. 14 is a view showing the confusion matrix of the training results with spectrum entropy data and instantaneous frequency data as the input layer.
FIG. 15 is a view showing the confusion matrix of the test results.

## Best Mode

To accomplish the above-mentioned objects, according to the present invention, there is provided an artificial intelligence-based internal defect detection system for concrete members including: a signal detection unit, which detects a reflection signal by excitation applied to a concrete member, which is a target inspection, and includes a first detection unit attached or placed close to the concrete member to measure both the reflection signal and external noise simultaneously, and a second detection unit installed to be spaced apart from the concrete member at a position close to the concrete member to measure external noise; and a data processing unit, which includes a signal processing unit which generates an impact echo signal by calculating a difference between a detection signal of the first detection unit and a detection signal of the second detection unit, generates a frequency signal from the impact echo signal, and extracts instantaneous frequency data from the frequency signal, and a defect determination module which receives the instantaneous frequency data generated by the signal processing unit as feature information to determine occurrence of defects of the concrete member, builds a defect occurrence decision model using a bidirectional LSTM model, and determines defects of the concrete member using the defect occurrence decision model based on the detected signal.

## Mode for Invention

Hereinafter, the present invention will be described in detail with reference to the attached drawings and preferred embodiments.

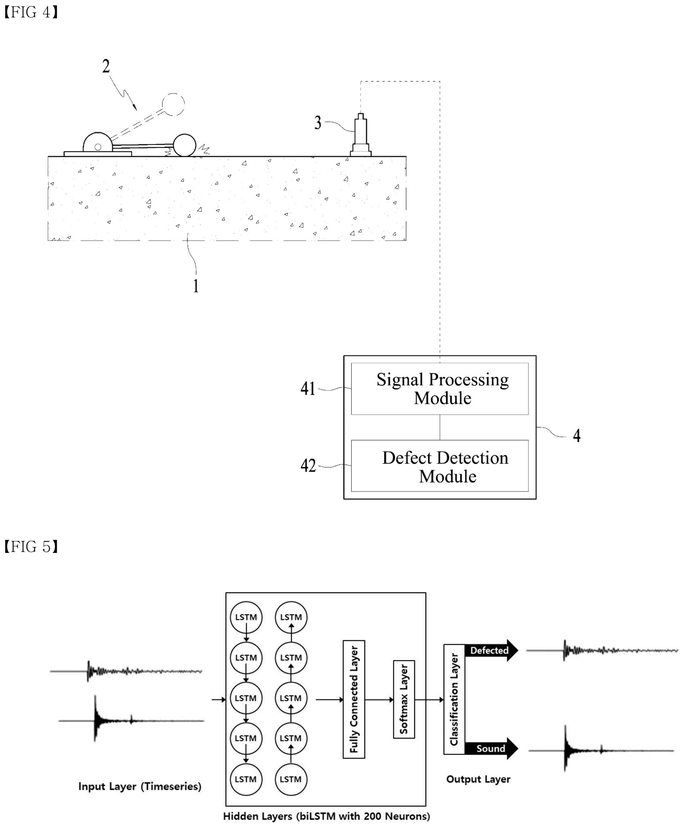

FIG. 4 is a view illustrating an internal defect detection system for concrete members according to an embodiment of the present invention, and FIG. 5 is a view illustrating a biLSTM network structure.

As illustrated in FIG. 4, an artificial intelligence-based internal defect detection system for concrete members according to the present invention includes: a signal detection unit 3 which detects a reflection signal caused by excitation applied to a concrete member 1, which is a target inspection; and a data processing unit 4, which includes a signal processing unit 41 which generates a frequency signal from a detection signal of the signal detection unit 3 and extracts instantaneous frequency data from the frequency signal, and a defect determination module 42 which receives the instantaneous frequency data generated by the signal processing unit 41 as feature information to determine occurrence of defects of the concrete member 1, builds a defect occurrence decision model using a bidirectional LSTM model and determines defects of the concrete member 1 using the defect occurrence decision model based on the detected signal.

The present invention is to provide an artificial intelligence-based internal defect detection system for concrete members, which when detecting a defect state through deep learning in non-destructive testing of concrete structures, is suitable for processing data with long sequences, improves the accuracy of classification through deep learning, and minimizes computation time.

The present invention for non-destructive testing of the concrete member 1 includes the signal detection unit 3 which detects the reflection signal of the concrete member 1, and the data processing unit 4 which determines defects of the concrete member 1 based on the detected signal.

The signal detection unit 3 detects the reflection signal caused by excitation applied to the concrete member 1 which is the target inspection.

The reflection signal may be impact echo, ultrasound, radiation, magnetic fields, etc.

As an example of impact echo, an impact is applied to the target concrete member 1 by an impactor 2 such as a steel ball, and the impact echo signal is detected through a signal detection unit 3 such as a microphone (FIG. 4).

The data processing unit 4 is a computing device to collect, transform, and analyze the detection signal to determine defects, and includes the signal processing unit 41 and the defect determination module 42.

The signal processing unit 41 processes raw data detected by the signal detection unit 3 to generate a frequency signal.

For example, the signal processing unit 41 can create frequency-amplitude data as a frequency signal by converting voltage data over time detected by the signal detection unit 3 through fast Fourier transformation (FFT).

The defect determination module 42 determines the occurrence of defects in the concrete member 1 based on the frequency signal generated by the signal processing unit 41, builds a defect occurrence decision model using a bidirectional LSTM model and determines defects of the concrete member 1 using the defect occurrence decision model based on the detected signal.

In other words, the defect determination module 42 learns the frequency signal through deep learning, and decide on defects in the concrete member 1.

In this instance, the bidirectional LSTM (biLSTM) model is used.

The biLSTM model uses both forward and backward results of the LSTM, which is a model overcoming the limitations of the recurrent neural network (RNN) through the gated technique.

As illustrated in FIG. 5, the biLSTM model, namely, the bidirectional LSTM network, adds an LSTM layer, which processes in reverse, to the existing LSTM layer. The final hidden state is output as a vector concatenating the hidden states of two LSTM layers.

Consequently, the biLSTM network solves the long-term dependency problem, so maintains performance even with lengthy data. Therefore, the biLSTM model is suitable for learning time-series signals detected from the concrete member 1 to determine defects.

To effectively perform on-site non-destructive testing in real-time, the data processing unit 4 can include a micro controller unit (MCU), which is a type of compact computer. A trained machine learning model can be implanted in the MCU for real-time decision making.

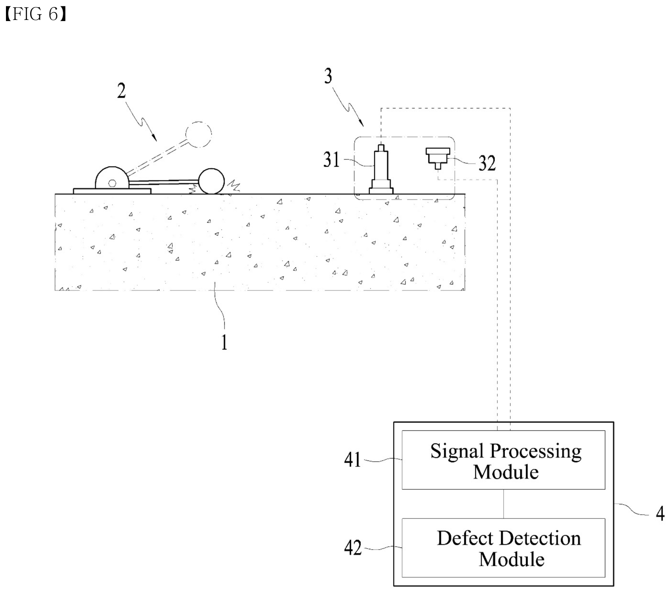

FIG. 6 is a view illustrating an internal defect detection system for concrete members according to another embodiment of the present invention.

As illustrated in FIG. 6, the signal detection unit 3 includes a first detection unit 31 which is attached or placed close to the concrete member 1 to measure both the reflection signal and external noise simultaneously, and a second detection unit 32 which is installed to be spaced apart from the concrete member 1 at a position close to the concrete member 1 to measure external noise. The signal processing unit 41 calculates the difference between the detection signal of the first detection unit 31 and the detection signal of the second detection unit 32 to generate an impact echo signal and create a frequency signal from the impact echo signal.

Since the concrete member is typically installed outdoors, various external noises are inevitable when conducting non-destructive testing using the impact echo method on-site. Therefore, external noise mixed with the reflection signal can affect the defect detection result.

Therefore, to extract an accurate reflection signal, the signal detection unit 3 can include the first detection unit 31 and the second detection unit 32.

The first detection unit 31 can be attached to or placed close to the concrete member 1.

The first detection unit 31 detects the reflection signal caused by excitation applied to the concrete member 1 which is the target inspection.

In this instance, the first detection unit 31 measures not only the reflection signal but also the external noise signal. In other words, both reflection signal and the external noise signal are input into the first detection unit 31.

The second detection unit 32 can be installed near yet spaced from the concrete member 1.

The second detection unit 32 can measure only the external noise at the inspection location.

The signal processing unit 41 receives the detection signals from both the first detection unit 31 and the second detection unit 32 and calculates the difference between the two signals to measure accurate reflected wave results.

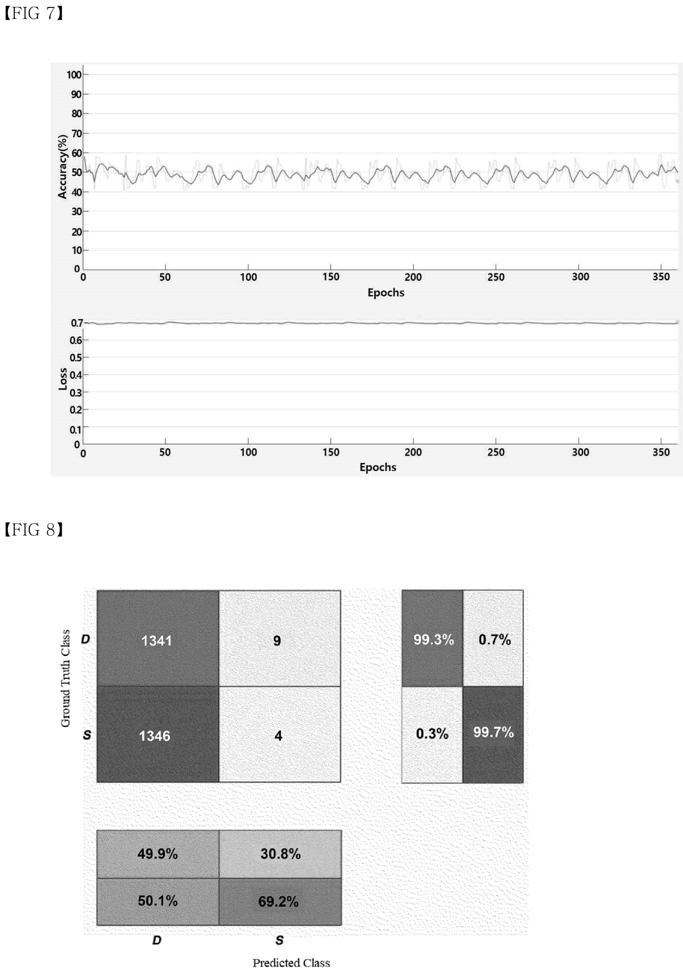

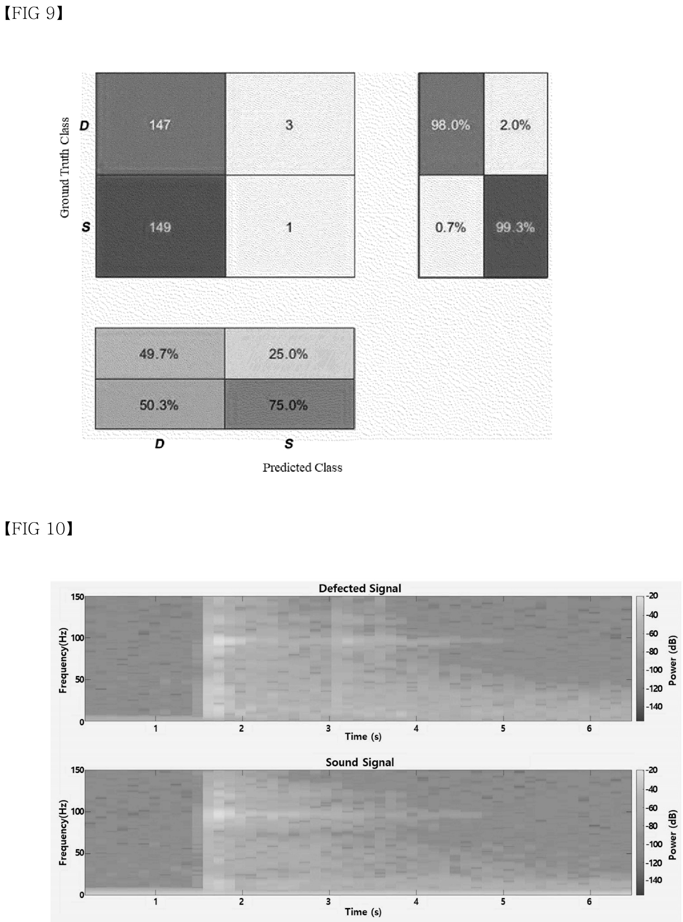

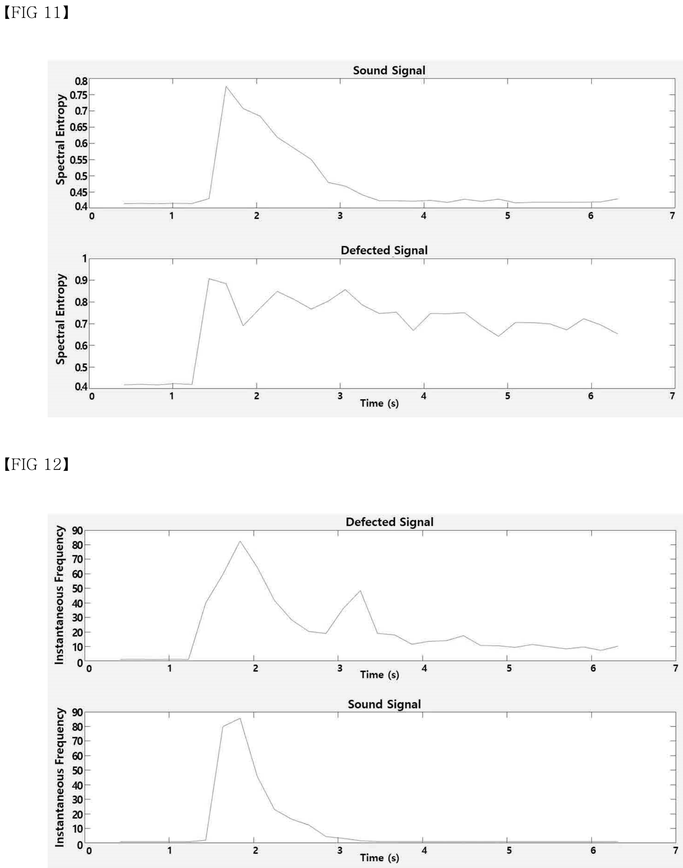

FIG. 7 is a graph showing the progress of training with frequency-amplitude data as an input layer, FIG. 8 is a view illustrating the confusion matrix for the training results with frequency-amplitude data as the input layer, FIG. 9 is a view showing a confusion matrix of test results, FIG. 10 is a spectrogram calculated from the frequency signal, and FIG. 11 is a graph representing spectrum entropy data.

The signal processing unit 41 can extract spectrum entropy data from the frequency signal, and the spectrum entropy data can have feature information input into the defect occurrence decision model.

The biLSTM model has a problem of reduced learning effectiveness when there is not a significant difference in data values over time series.

However, the frequency-amplitude data generated by the signal processing unit 41 often does not show a significant difference in data values between cases with and without defects. Therefore, even when using the biLSTM model, the deep learning training effect can be reduced.

FIG. 7 is a graph showing the progress of training with frequency-amplitude data as an input layer.

In the upper graph of FIG. 7, it can be seen that accuracy does not increase but remains stagnant with the progression of training. Additionally, in the lower graph of FIG. 7, even if the number of training repetitions increases, the loss rate does not decrease and remains constant. So, there is little learning effectiveness.

FIGS. 8 and 9 show confusion matrices of the training result and the test result using frequency-amplitude data as the input layer.

The training result and the test result tend to classify all cases as having defects regardless of the actual status, thus resulting in an accuracy of only about 50%.

Therefore, when using the biLSTM model, to enhance the accuracy of defect detection, it is necessary to use data values with significant differences between cases with and without defects.

For this purpose, in the present invention, spectral entropy data can be used as feature information input into the defect occurrence decision model.

FIG. 10 shows a spectrogram calculated from the frequency signal, wherein the spectrogram represents the difference in amplitude according to changes in the time axis and the frequency axis as color variations.

The upper image in FIG. 10 represents a case with defects, and the lower image represents a case without defects.

The spectral entropy is feature information that signifies the uniformity (or complexity) of the spectrogram and can express the amount of information contained in the signal.

FIG. 11 is a graph representing spectral entropy data. The upper graph in FIG. 11 is the spectral entropy of a normal concrete member without defects, and the lower graph is the spectral entropy of a concrete member with defects.

FIG. 11 shows that there is a significant difference in spectral entropy data values depending on the presence of defects in the concrete member.

The signal processing unit 41 can generate spectral entropy data from the frequency signal by the fast Fourier transformation (FFT).

The spectral entropy data can be created from the frequency signal by the fast Fourier transformation (FFT).

Specifically, the equation for spectral entropy can be derived from the equation of the power spectrum of the frequency signal and the probability distribution.

The power spectrum relative to a signal x(n) is $S(m) = |X(m)|^2$, wherein X(m) is the discrete Fourier transformation of x(n).

Then, the probability distribution P(m) can be expressed as the following mathematical formula 1.

[Mathematical Formula 1]

$$P(m) = \frac{S(m)}{\Sigma_i S(i)}$$

Consequently, the spectral entropy H can be calculated according to the following Mathematical Formula 2.

[Mathematical Formula 2]

$$H = -\sum_{m=1}^{N} P(m) \log_2 P(m)$$

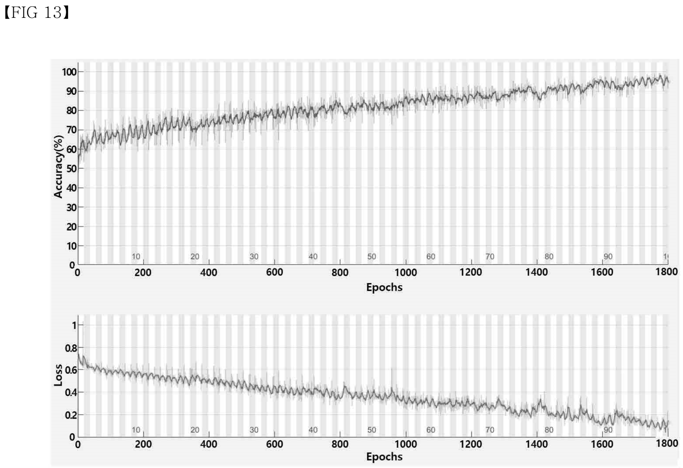

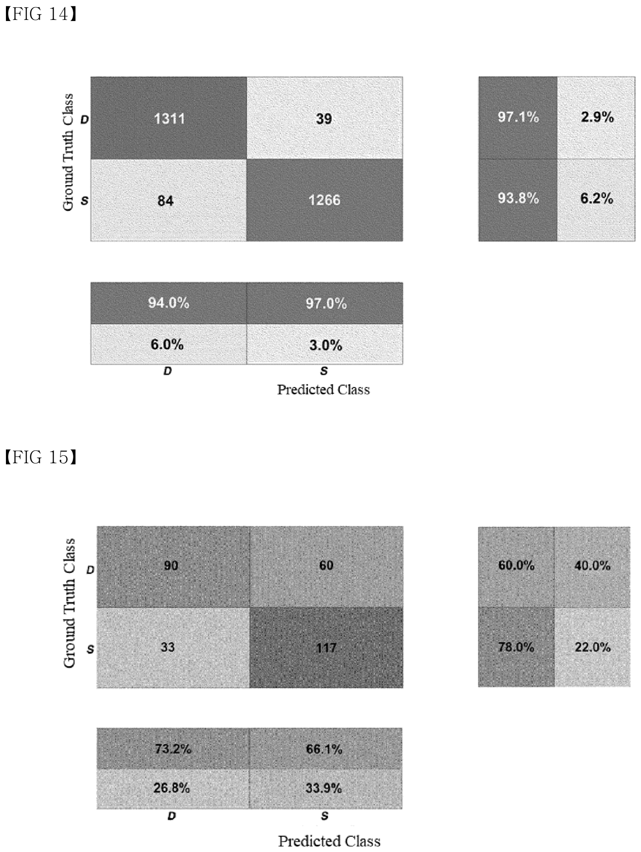

FIG. 12 is a graph showing instantaneous frequency, FIG. 13 is a graph showing the progress of training with spectrum entropy data and instantaneous data as the input layer, FIG. 14 is a view showing the confusion matrix of the training results with spectrum entropy data and instantaneous frequency data as the input layer, and FIG. 15 is a view showing the confusion matrix of the test results.

The signal processing unit 41 extracts instantaneous frequency data from the frequency signal, and the instantaneous frequency data can include feature information input into the defect occurrence decision model.

For the conventional frequency-amplitude data computation or spectral entropy computation, the fast Fourier transformation (FFT) is required. However, the fast Fourier transformation (FFT) requires extensive computation time due to high computational loads.

Therefore, to compute very fast and significantly reduce the time required for defect detection, the instantaneous frequency data can be used.

Instantaneous frequency refers to the frequency at any given moment when the frequency varies over time. The instantaneous frequency is the rate of change over time of a phase angle when the phase angle of waves is a function of time, and can be represented as the following Mathematical Formula 3.

[Mathematical Formula 3]

$$\nu(t) = \frac{1}{2\pi} \frac{d\phi}{dt}$$

The instantaneous frequency is a useful concept for describing a non-monochromatic (polychromatic) signal.

When the instantaneous frequency is used, as illustrated in FIG. 12, there is a clear difference in data values according to whether there are defects or not.

FIG. 12 shows a graph of instantaneous frequency. The upper graph in FIG. 12 shows a normal concrete member without defects, and the lower graph shows a concrete member with defects.

The instantaneous frequency can be obtained by a Hilbert transformation filter.

FIG. 13 shows the training progress when training is conducted with spectral entropy data and instantaneous data as input layers.

In the upper graph of FIG. 13, it can be seen that accuracy increases with the progression of training.

Furthermore, the lower graph in FIG. 13 shows that the loss rate decreases as the number of training repetitions increases, thereby indicating excellent learning effectiveness.

FIGS. 14 and 15 show the confusion matrix of the training and test results when the spectral entropy data and the instantaneous frequency data are used as input layers.

FIGS. 14 and 15 show that the accuracy of the training data reaches 95.44%.

The spectral entropy data and the instantaneous frequency data can be all input as feature information, or any one of the spectral entropy data and the instantaneous frequency data can be used as feature information.

When the instantaneous frequency is used as the input layer, computation time is reduced to one to two seconds or less, thereby significantly decreasing the training time required for deep learning. Additionally, during an actual testing of the concrete member, defects can be determined at roughly the same time with the striking of the concrete member.

Accordingly, the impactor 2 can be made mobile, and can conduct the non-destructive testing quickly over a wide range of locations while moving across multiple points of the concrete member.

In this case, when the impactor 2 and the signal detection unit 3 are integrated and equipped with an IoT communication module, the efficiency of non-destructive testing can be maximized.

**Industrial Applicability**

The artificial intelligence-based internal defect detection system for concrete members enables the defect determination module to learn the frequency signal, which is generated by the signal processing unit from the detection signal caused by excitation applied to the concrete member, through deep learning, thereby determining whether the concrete member is defected or not. Specifically, the artificial intelligence-based internal defect detection system for concrete members can build the defect occurrence determination model using the bidirectional LSTM model, thereby being suitable for processing data with long sequences, improving the accuracy of classification through deep learning, and minimizing computation time. Therefore, the artificial intelligence-based internal defect detection system for concrete members according to the present invention has industrial applicability.

**Claims**

1. An artificial intelligence-based internal defect detection system for concrete members comprising:

   a signal detection unit (3), which includes a first detection unit (31) attached or placed close to the concrete member (1) and detecting a reflection signal by excitation applied to a concrete member, which is a target inspection, to measure both the reflection signal and external noise simultaneously, and a second detection unit (32) installed to be spaced apart from the concrete member (1) at a position close to the concrete member (1) to measure external noise; and
   a data processing unit (4), which includes a signal processing unit (41) which generates an impact echo signal by calculating a difference between a detection signal of the first detection unit (31) and a detection signal of the second detection unit (32), generates a frequency signal from the impact echo signal, and extracts instantaneous frequency data from the frequency signal, and a defect determination module (42) which receives the instantaneous frequency data generated by the signal processing unit (41) as feature information to determine occurrence of defects of the concrete member (1), builds a defect occurrence decision model using a bidirectional LSTM model, and determines defects of the concrete member (1) using the defect occurrence decision model based on the detected signal.

2. The artificial intelligence-based internal defect detection system according to claim 1, wherein the signal processing unit (41) can extract spectrum entropy data from the frequency signal, and
   wherein the spectrum entropy data has feature information input into the defect occurrence decision model.

3. The artificial intelligence-based internal defect detection system according to claim 2, wherein the signal processing unit (41) generates spectral entropy data from the frequency signal by the fast Fourier transformation.

【FIG 1】

【FIG 2】

【FIG 3】

【FIG 4】

| | |
|---|---|
| 41 | Signal Processing Module |
| 42 | Defect Detection Module |

【FIG 5】

Input Layer (Timeseries)

Hidden Layers (biLSTM with 200 Neurons)

Output Layer

【FIG 6】

【FIG 7】

【FIG 8】

【FIG 9】

【FIG 10】

【FIG 11】

【FIG 12】

【FIG 13】

【FIG 14】

【FIG 15】

## INTERNATIONAL SEARCH REPORT

| | International application No. |
|---|---|
| | **PCT/KR2023/021982** |

| A. | CLASSIFICATION OF SUBJECT MATTER |
|---|---|

**G01N 29/04**(2006.01)i; **G01N 29/42**(2006.01)i; **G01N 29/44**(2006.01)i; **G01N 29/46**(2006.01)i

According to International Patent Classification (IPC) or to both national classification and IPC

| B. | FIELDS SEARCHED |
|---|---|

Minimum documentation searched (classification system followed by classification symbols)

G01N 29/04(2006.01); G01N 29/42(2006.01); G01N 33/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인공지능(artificial intelligence), 결함(defect), 콘크리트(concrete), LSTM 모델 (long short-term memory model), 스펙트럼(spectrum), 순시 주파수(instantaneous frequency), 푸리에 변환(Fourier transform)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | MURAMATSU et al. Noncontact detection of concrete flaws by neural network classification of laser doppler vibrometer signals. Engineering Research Express. 2020, vol. 2, no. 2, pp. 1-11.<br>See pages 1-5 and figures 1-3. | 1-3 |
| A | SIRACUSANO et al. Automatic crack classification by exploiting statistical event descriptors for deep learning. Applied Sciences. 17 December 2021, vol. 11, no. 24, pp. 1-21.<br>See pages 1-17 and figures 1-10. | 1-3 |
| A | DONG et al. Deep transfer learning based on Bi-LSTM and attention for remaining useful life prediction of rolling bearing. Reliability Engineering & System Safety. 19 October 2022, vol. 230, pp. 1-12.<br>See pages 1-10 and figures 1-15. | 1-3 |
| A | KR 10-2241879 B1 (KOREA INSTITUTE OF CIVIL ENGINEERING AND BUILDING TECHNOLOGY et al.) 20 April 2021 (2021-04-20)<br>See paragraphs [0014]-[0051], claim 1 and figures 1-6. | 1-3 |
| A | KR 10-1936849 B1 (GLOBAL SOLUTION GROUP CO., LTD.) 11 January 2019 (2019-01-11)<br>See paragraphs [0043]-[0104] and figures 1-4. | 1-3 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 March 2024** | **29 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/021982** |

| C. | DOCUMENTS CONSIDERED TO BE RELEVANT | |
| --- | --- | --- |
| Category* | Citation of document, with indication, where appropriate, of the relevant passages | Relevant to claim No. |
| PX | KR 10-2611457 B1 (SEOUL NATIONAL UNIVERSITY R&DB FOUNDATION) 06 December 2023 (2023-12-06)<br>See claims 1, 3 and 4.<br>※ This document is the published patent of an earlier application that serves as a basis for claiming priority of the present international application. | 1-3 |

Form PCT/ISA/210 (second sheet) (July 2022)

**INTERNATIONAL SEARCH REPORT**
Information on patent family members

International application No.

**PCT/KR2023/021982**

| Patent document cited in search report | | | Publication date (day/month/year) | Patent family member(s) | Publication date (day/month/year) |
|---|---|---|---|---|---|
| KR | 10-2241879 | B1 | 20 April 2021 | None | |
| KR | 10-1936849 | B1 | 11 January 2019 | None | |
| KR | 10-2611457 | B1 | 06 December 2023 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102241879